Europäisches Patentamt

(19) European Patent Office

Office européen des brevets

(11) Publication number: **0 162 623**
**A1**

(12) **EUROPEAN PATENT APPLICATION**

(21) Application number: **85303159.9**

(22) Date of filing: **03.05.85**

(51) Int. Cl.⁴: **E 02 F 5/10**
**E 02 F 5/12, F 16 L 1/02**

(30) Priority: **05.05.84 GB 8411591**

(43) Date of publication of application:
**27.11.85 Bulletin 85/48**

(84) Designated Contracting States:
**AT BE CH DE FR IT LI LU NL SE**

�
71 Applicant: **Davison, Geoffrey Wilfred**
**157 High Street**
**Cottenham Cambridge(GB)**

(72) Inventor: **Davison, Geoffrey Wilfred**
**157 High Street**
**Cottenham Cambridge(GB)**

(74) Representative: **Nash, Keith Wilfrid et al,**
**KEITH W. NASH & Co. Pearl Assurance House 90-92**
**Regent Street**
**Cambridge CB2 1DP(GB)**

(54) **Sand-slitting and pipe-laying apparatus.**

㊲ Apparatus for improving the permeability of the soil comprising a wheeled chassis (60) adapted to be moved over the surface of the ground which is to be treated on which is mounted or associated therewith: cutting means (30) for cutting a trench, means for collecting spoil (80) removed from the trench by cutting means, a store (54) of particulate material carried in association with the apparatus, chute means for backfilling the trench with particulate material, and means for conveying particulate material to the backfilling means as the apparatus moves over the ground.

The apparatus can include pipe feeding means (70) for feeding perforated drainage pipe into the trench before the backfilling operation. The apparatus may also include means for feeding sheet material into the trench above the gravel to provide a membrane thereover before further backfilling occurs.

A single feeding means may be used comprising a unit which extends to the bottom of the trench and which dispenses simultaneously into the trench a length of pipe, a quantity of gravel and sheet material in their correct relative positions.

The invention also provides an improved method of sand slit drainage with or without pipe laying.

./...

Croydon Printing Company Ltd.

Fig.8

- 1 -

C96/D

Title: Sand slitting and Pipe laying apparatus.

DESCRIPTION

Field of the invention

This invention relates to slit drainage apparatus, particularly apparatus for high speed narrow trenching, evacuating spoil and backfilling with imported material to improve permeability in the region of the backfilled slit.

The invention is particularly applicable to apparatus of this type modified so as to lay perforated drainage pipes over sportsfields and agricultural land, but the invention is not restricted to such applications.

Summary of the invention

According to the present invention there is provided an apparatus comprising a wheeled chassis, self-propelled or adapted to be towed by a towing vehicle such as a tractor, cutting means on the chassis for cutting a trench, means for collecting the spoil and backfilling means for backfilling the trench.

Where the apparatus (as will often be the case) is simultaneously required to lay a perforated pipe before backfilling, the apparatus preferably includes pipe feeding means for feeding pipe into the trench before the backfilling operation.

With the means for performing all the necessary functions mounted on a single chassis, the operation of slit-making (and where appropriate pipe-laying), becomes very quick and easy to perform. It is simply necessary to make one pass, along the desired path of the slit and/or pipe.

The cutting means on the chassis may comprise a first set of components for turf removal and a second set of components for excavating the trench.

The first set of components can comprise two spaced cutting discs staggered int he direction of travel, which run parallel to one another and make vertical cuts through the turf along the path of the trench, together with a chisel and mould board which lifts the turf cut by the discs.

The second set of components may comprise two spaced cutting blades which project to the desired depth of the trench, and which are followed by a chisel and mould board, which raises the soil from the trench to the surface.

In a preferred embodiment, the apparatus includes means for collecting the excavated material which hereinafter will be referred to as 'spoil'.

The apparatus preferably includes a store of pipe which is to be laid in the trench, and as the apparatus is drawn over the ground, pipe is paid out from this store and laid in the ground.

The feeding means, in addition to feeding pipe, may also feed gravel, to form a gravel bed above the pipe, and a membrane to be positioned in the trench above the gravel bed.

The feeding means may comprise a unit which extends to the bottom of the trench and which dispenses simultaneously pipe, gravel and membrane in their correct relative positions. This unit may include a facility for altering the depth of the gravel bed which will be laid.

The apparatus may also include a store of gravel and a store of membrane, preferably in the form of a roll of membrane material.

The backfilling means may comprise a hopper containing backfill material (e.g. sand) and a dispenser which may vibrate or oscillate which projects into the trench to fill the space above the membrane.

The dispenser may be a hollow chute which may or may not have a solid leading edge.

The backfilling means may include an applicator for applying seed and nutrient backfill at the top of the backfilled trench, and a roller for compressing the backfill.

The inclusion of a seed and nutrient backfill applicator means that no further treatment of the disturbed ground is necessary, and the seed can be left to grow to reinstate the ground to its original condition after just one pass over the ground.

The invention also provides a method of forming a drainage slit in the ground, comprising the steps of drawing or driving over the ground along the desired path of the slit, apparatus which will first form a trench, then fill the trench with imported material all in a single pass over the ground.

The invention also provides a method of laying a perforated drainage pipe in the ground comprising the steps of drawing or driving over the ground along the desired path of the slit, apparatus which will first form a trench, then introduce into the trench a length of pipe and then fill the trench over the pipe with imported material, all in a single pass over the ground.

Brief description of the drawings

The invention will now be further described, by way of example, with reference to the accompanying drawings, which illustrate inter alia slit drainage apparatus embodying the invention and including pipe laying means.

Figures 1 to 7 show sequential steps in the laying of a pipe using a method in accordance with the invention;

Figures 2a to 7a show, in side view, how the various stages of Figures 2 to 7 are carried out using the apparatus embodying the invention;

Figure 8 is a side view of a pipe-laying apparatus in accordance with the invention;

Figure 9 is a perspective view showing some parts of the apparatus shown in Figure 8;

Figure 10 is a detail view, partly cut away, of the dispensing unit from Figure 9; and

Figure 11 is a plan view showing some of the components of the apparatus.

## Description of a preferred embodiment

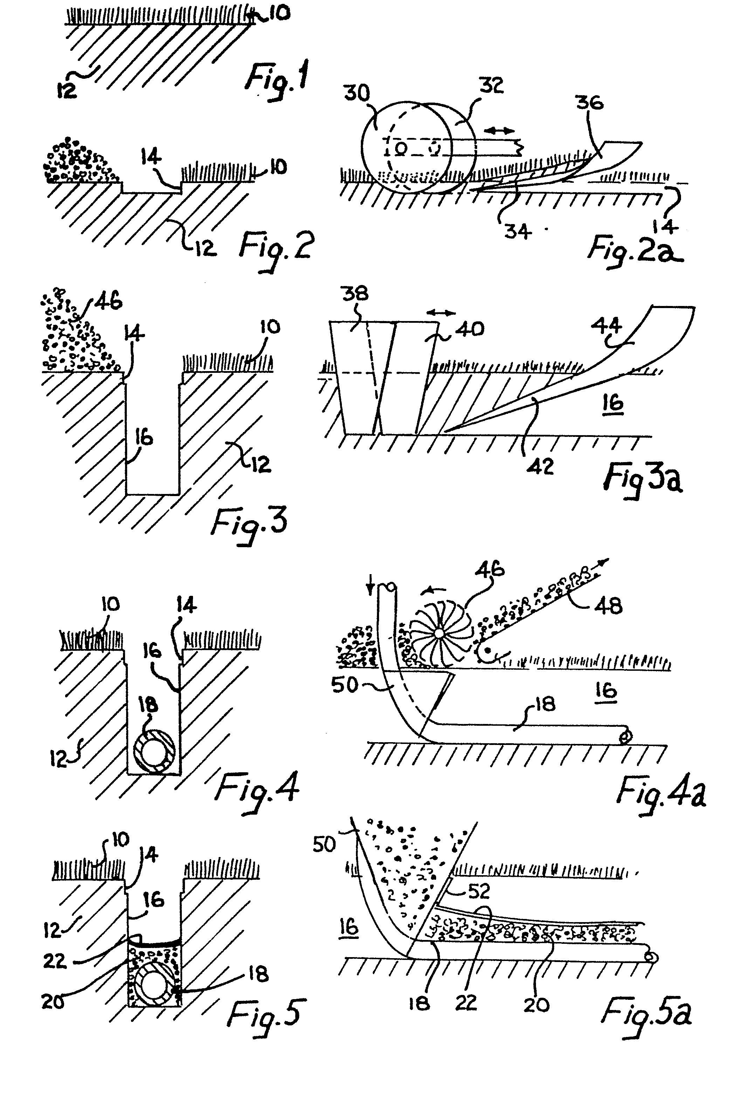

Figure 1 shows a piece of ground where a pipe is to be laid with grass 10 growing above soil 12.

Figure 2 indicates where a slice of turf has been removed along the line where a pipe is to be laid, leaving a recess 14 at the surface.

Figure 3 shows the recess 14 deepened to form a trench 16.

Figure 4 shows a pipe 18 laid at the bottom of the trench 16.

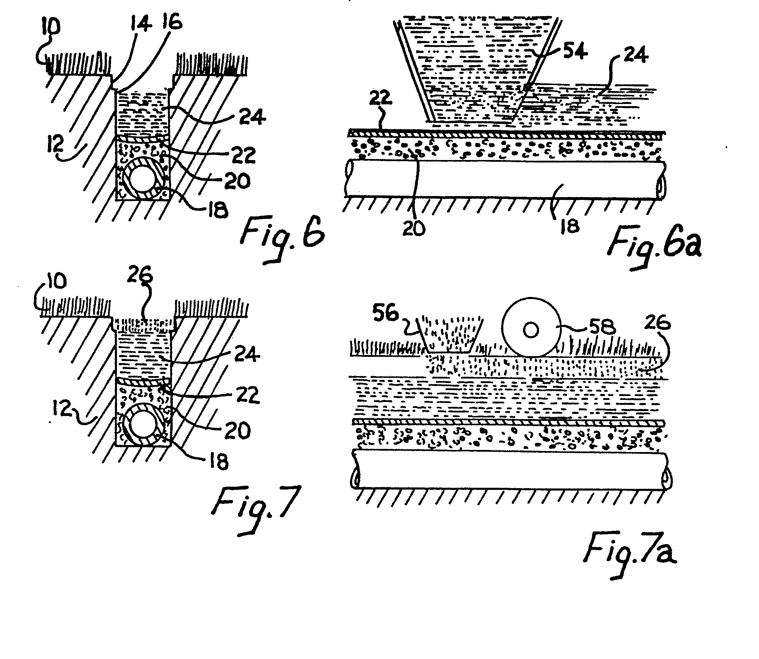

Figure 5 shows the pipe covered with a layer 20 of gravel which forms an initial backfill around the pipe. The gravel is itself covered by U-shaped membrane 22.

Figure 6 shows the trench 16 further backfilled by a layer of sand 24 above the membrane 22.

Figure 7 shows a final backfill layer 26 of seed and nutrient which finally fills the trench 16 to the level of the surrounding ground 12. The seed will then grow so that the land which has been excavated to lay the trench will soon become indistinguishable from the undisturbed land.

Pipe 18 shown is a perforated drainage pipe which has perforations allowing water to enter the pipe and then to be drained away. Such pipes are laid to improve drainage from land, where for some reason the natural drainage is inadequate. The gravel layer 20 is provided to ensure that moisture passages remain open to the pipe 18, and the membrane 22 is provided to prevent the sand working its way into the gravel layer 20 and blocking the interstices amongst the gravel.

Figures 2a to 7a show the various components of an apparatus which will perform the steps shown in Figures 1 to 7 in one operation.

In Figures 2a to 7a, the various components are shown separate from one another but these components will be shown combined, as they are in use, with reference to the later Figures. In all of Figures 2a to 7a, the apparatus is advancing from right to left.

In Figure 2a, cutting discs 30 and 32 are mounted parallel to one another and spaced apart by the desired width of the trench. These discs penetrate into the ground to about the depth of the grass roots in the ground, and the discs are followed by a cutter with has a blade 34 followed by a mould board 36. The blade 34 cuts into the ground and lifts a turf between the cuts made in the ground by the discs 30 and 32. The lifted turf is then diverted by the mould board 36 to one side of the track 14 cut in the ground.

After removal of the turf, two deep cutting blades 38 and 40 are drawn through the ground. These blades are again parallel to one another and are spaced apart a distance slightly less than the spacing of the discs 30 and 32.

These blades are followed by another cutter which has a blade 42 followed by a mould board 44. The depth of the leading edge of the blade is substantially the same as the depth of the bottom of the blades 38 and 40, and this blade removes soil from the trench 16, to the full depth of the trench. The soil or spoil is diverted by the mould board to one side of the trench where it forms a pile 46.

A brush 46 is mounted on the apparatus, to one side of the trench which has now been cut. This brush rotates in contact with the ground on one side of the trench and brushes the spoil diverted by the mould boards 36 and 44 onto a spil removal elevator 48. There is thus no debris left on the ground beside the trench, and as will be described later the trench will be refilled with new material and the spoil will be removed for disposal elsewhere.

Figure 4a also shows the pipe 18 fed from a store which is not shown in this Figure, through a dispenser unit 50 to the bottom of the trench. Figure 5a shows this operation in more detail and includes the dispensing of the gravel 20 and the membrane 22. For the sake of clarity, the membrane 22 and gravel 20 have been omitted from Figure 4a.

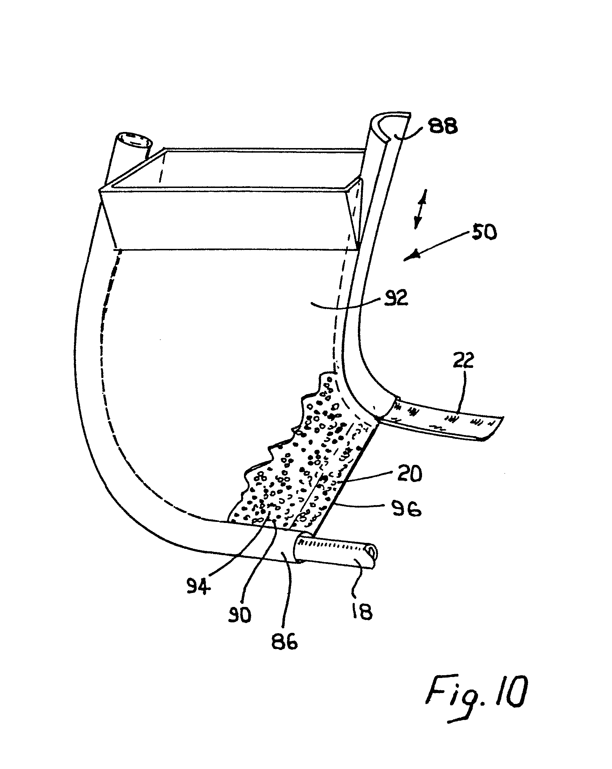

At the start of a trench, the pipe 18 and the membrane 22 will be secured in position so that as the apparatus advances along a cut trench, both these materials will be pulled from positions where they are stored on the apparatus. The dispenser unit 50 includes an adjustable gate 52 which also functions as a membrane guide. The unit 50 will however be described in more detail with reference to Figure 10.

Downstream of the dispenser unit 50, is a sand infill hopper 54 which lays a sand backfill 24 above the membrane 22. The depth of this sand backfill 24 will be determined in accordance with the position of the membrane 22 and the depth of the trench 16. The top of the backfill is designed to reach a desired height in the trench, but the sand backfill does not however completely fill the trench.

The final layer of back fill in the trench is a seed and nutrient backfill 26. This is dispensed from an applicator 56 and after having been dispensed is rolled by a roller 58 which flattens and compresses the backfill. The refilled trench is then left.

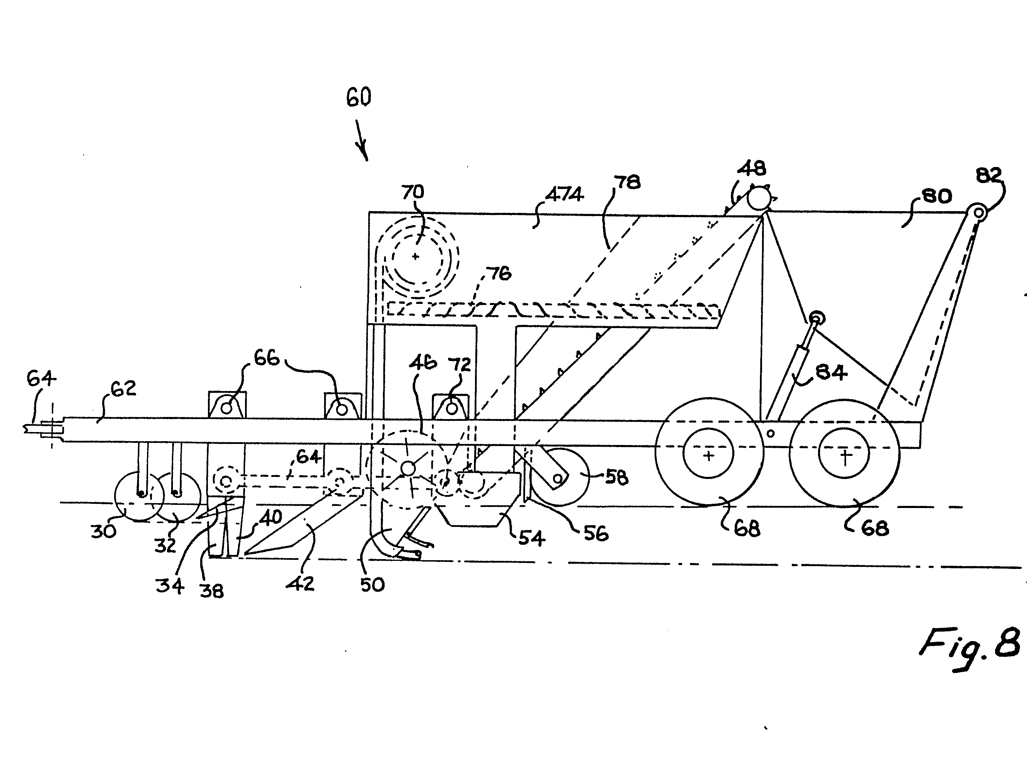

Figure 8 shows how all these components are combined on one trailer 60. The trailer has a main beam 62 with a drawbar 64 at the front by means of which it can be connected to any convenient towing vehicle, for example an agricultural tractor.

In the first position on this beam 62 are the cutting discs 30 and 32 followed by the turf cutting blade 34. The knives 38 and 40 then follow together with their blade 42. These blades 38, 40 and 42 are connected by a coupling link 64 and are each connected to the beam 62 by pivots 66. This assembly can be driven by any convenient source of oscillating or vibrating movement to oscillate or vibrate the knives as they cut through the ground to improve their cutting performance.

The spoil removal brush 46 is mounted to one side of the beam 62, and directly below the beam at about the same longitudinal position is the dispenser unit 50.

Downstream of the dispenser unit is the sand infill hopper 54 followed by the seed and nutrient applicator 56 and the roller 58. The far end of the trailer 60 is supported on ground wheels 68 which are spaced apart so that they run on either side of the trench being cut.

Above the beam 62, there are arranged stores of the various materials required. A reel of 70 stores pipe 18. The reel is freely journalled so that as the trailer advances the tension in the pipe causes the reel to unroll to dispense more pipe. A similar reel is provided for the sheet material 22 which is to form a membrane over part of the backfill material, but this is not shown in the drawings.

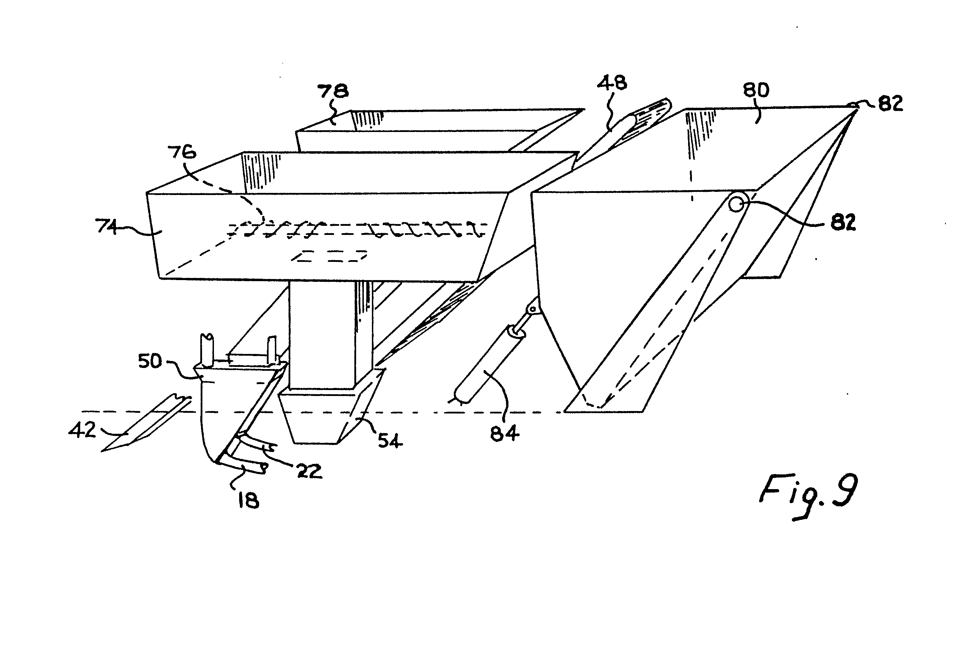

The sand infill hopper 54 is mounted on the beam 62 by means of a pivot 72, so that this can be oscillated during operation to compact the sand which is being laid in the trench. The sand is stored in a container 74, and an auger 76 at the bottom of this container directs the sand to the hopper 54. A similar container 78 (see Figure 9) is provided for gravel.

A spoil remover elevator 48 leads from the position of the brush 46 to discharge into a spoil container 80. This container is at the rear of the trailer 60 and is mounted to the trailer on an axis 82 with a jack 84 being extendable to tip the container 80 to dump any spoil contained in it.

The dispenser unit 50 is shown in more detail in Figure 10. The unit comprises a lower channel 86 through which the pipe 18 is fed and an upper channel 88 through which the membrane 22 is fed. The lower channel 86 is in the form of a pipe of larger diameter than that of the pipe 18, and is curved in a radius around which the pipe 18 will pass. The channel 88 is U-shaped in cross section so that it imparts its shape to the membrane 22 as the membrane leaves the unit 50. The channel 88 can actually be moved bodily up and down between the side walls 90 and 92 of the unit 50. The gravel hopper 78 leads into a space 94 between the channels 86 and 88, and this space is defined by the two channels 86, 88 and by the two walls 90 and 92. The gravel outlet is therefore indicated at 96. The area of this gravel outlet will vary as the channel 88 is moved up or down between the side walls 90 and 92.

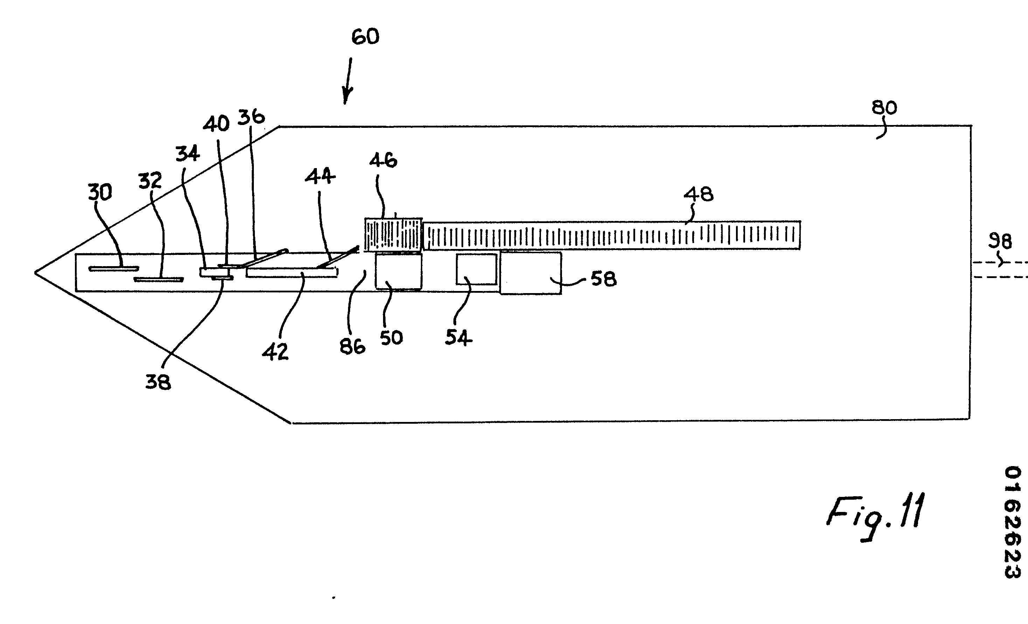

Figure 11 shows a number of the components shown in Figures 8 and 9, and in particular shows the position of the mould boards 36 and 44 indicating how these divert the spoil removed from the trench to a position where the spoil will be picked up by the brush 46. This Figure also illustrates, in dotted lines 98, the extent of the trench in which a pipe is to be laid. The apparatus described makes pipe-laying in a trench a very simple, one step operation. The trench is in fact open for a very short distance beneath the trailer 60, and this distance is just sufficient to place the pipe at the bottom of the trench before the trench is refilled.

The width of the trench to be dug can be adjusted for example between widths of 20 mm and 100 mm. The width will of course be determined by the diameter of the pipe 18 to be laid. Furthermore, the depth to which the trench is to be dug and that to which the pipe is to be laid can be varied up to a depth such as 500 mm.

The laying of drainage pipe in the way described is particularly suitable for use in sports or amenity areas, but the invention is not restricted to the laying of a drainage pipe, and other types of pipe could be laid with suitable backfill compositions.

The cutting discs 30 and 32 can typically cut to a depth of 150 mm.

The cutting knife can be connected through the link 64 to provide for lateral oscillation of the blade 42.

The spoil container 80 need not be part of the trailer 60, and the elevator 48 could discharge into a seaprate container travelling alongside the trailer. It is merely necessary that these and related sources or collecting devices are associated with the chassis.

The sand infill hopper 54 can be arranged to oscillate laterally to help the ejection and consolidation of the sand. This hopper may however contain materials other than sand, depending on the required characteristics of the infill.

The roller 58 may be wider than the width of the trench (see Figure 11) so that it packs down the top of the trench to be level with the adjacent ground, and also packs down the edges of the adjacent ground which may have been disturbed.

The apparatus may be a trailer as shown in the Figures, or it may be a self-propelled vehicle. All those parts which project below the ground level as defined by the ground wheels 68 may be retracted above the ground level for travelling and lowered when the machine is in work.

The auger 76 shown in the sand container 74 is only one example of a number of different methods which can be used to direct the sand to the hopper 54.  The sand may feed itself under the influence of gravity, or alternatively a moving belt could possibly be provided.

There are three oscillation points in the apparatus described, about the pivot points 66 and 72.  Oscillation of parts about these pivot points may be independent, or they may be connected together so that they all oscillate together at the same frequency.  Oscillation may be produced by any convenient means, for example by an eccentric and connecting rod, by shaker boxes or by offset revolving weights mounted on pivoted spring loaded arms.

Other methods of producing oscillation or vibration are also possible, provided they can produce a sufficiently powerful movement to have the desired result.

PATENT CLAIMS

1. Apparatus for improving the permeability of the soil comprising a wheeled chassis adapted to be moved over the surface of the ground which is to be treated <u>characterised by</u>:

cutting means on the chassis for cutting a trench,

means for collecting spoil removed from the trench by the cutting means,

a store of particulate material carried in association with the apparatus,

chute means for backfilling the trench with particulate material, and

means for conveying particulate material to the backfilling means as the apparatus moves over the ground.

2. Apparatus according to claim 1 further comprising pipe feeding means for feeding pipe into the trench before the backfilling operation.

3. Apparatus according to claim 1 or 2 wherein the cutting means on the chassis comprises a first set of components for turf removal and a second set of components for excavating the trench.

4. Apparatus according to claim 3 further comprising means for collecting the excavated material from the trench.

5. Apparatus according to claim 2 further comprising a store of pipe in association with the chassis and means for conveying the pipe to the pipe feeding means as the chassis moves over the ground.

6. Apparatus according to claim 2 wherein the pipe feeding means, in addition to feeding pipe, is also adapted to feed gravel after the pipe, to form a gravel bed above the pipe

7. Apparatus according to claim 6 wherein a store of sheet material is associated with the chassis and means is provided for feeding the sheet material into the trench above the gravel to provide a membrane thereover before further backfilling occurs.

8. Apparatus according to claim 2 wherein the feeding means comprises a unit which extends to the bottom of the trench and which dispenses simultaneously into the trench a length of pipe, a quantity of gravel and sheet material in their correct relative positions.

9. Apparatus according to claim 7 wherein the feeding means includes a facility for altering the depth of the gravel bed to be laid.

10. Apparatus according to claim 10 wherein the backfilling means comprises a hopper containing backfill material and a dispenser adapted to be vibrated or oscillated and which projects into the trench to fill the space above the membrane.

11. Apparatus according to claim 12 wherein the backfilling means includes an applicator for applying seed and nutrient backfill at the top of the backfilled trench, and a roller for compressing the backfill.

12. A method of forming a drainage slit in the ground comprising the steps of causing an apparatus according to claim 1 to move over the ground along the desired path of the slit, to thereby form a trench and then fill the trench with imported material all in a single pass over the ground.

13. A method of laying a perforated drainage pipe in the ground comprising the steps of causing an apparatus according to claim 2 to move over the ground along the desired path of the slit, thereby first to form a trench, then introduce into the trench a length of pipe and then fill the trench over the pipe with imported material, all in a single pass over the ground.

0162623

Fig.1

Fig.2

Fig.2a

Fig.3

Fig.3a

Fig.4

Fig.4a

Fig.5

Fig.5a

Fig.6

Fig.6a

Fig.7

Fig.7a

0162623

Fig. 8

60

82 80 84 68 48 68 78 474 76 70 58 56 54 72 46 66 64 42 40 50 62 30 32 34 38 64

Fig.9

*Fig. 10*

Fig. 11

# EUROPEAN SEARCH REPORT

**0162623**

Application number

EP 85 30 3159

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 353 745 (L.P. STUART WILSON) <br> * Page 1, line 9 - page 3, line 1; figures 1-7 * | 1-6,12 | E 02 F 5/10 <br> E 02 F 5/12 <br> F 16 L 1/02 |
| A | | 8-10, 13 | |
| X | GB-A-1 301 405 (H. BARTHEL et al.) <br> * Claims 1-11; figures 1,2 * | 1-5,10 ,12,13 | |
| X | GB-A-1 380 398 (E. STANIFORTH et al.) <br> * Claims 1-4; figures * | 1,3,4, 10,12 | |
| X | FR-A-1 399 392 (P. NIEDERWEMMER) <br> * Page 2, column 2, line 19 - page 3, column 3, line 61; figures 1-7 * | 1-10, 12,13 | **TECHNICAL FIELDS SEARCHED (Int. Cl.4)** <br><br> E 02 F <br> F 16 L |
| X | GB-A-2 055 440 (J. GILCHRIST) <br><br> * Claims 1-8; figures 1-5 * | 1-6,9, 12,13 | |
| Y | GB-A-1 226 958 (J.P. PRUNTY) <br><br> * Claims 1-5; figures 1-3 * | 1-6,9, 12,13 | |
| | --- -/- | | |

The present search report has been drawn up for all claims

| Place of search | Date of completion of the search | Examiner |
|---|---|---|
| THE HAGUE | 30-07-1985 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

0162623

**European Patent Office**

**EUROPEAN SEARCH REPORT**

Application number

EP 85 30 3159

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | US-A-4 329 087 (C.R. SATTERWHITE) * Abstract; figures 1-19 * | 1-6,9, 12,13 | |
| A | US-A-3 585 804 (M. SRAMEK) * Abstract * | 11 | |

TECHNICAL FIELDS SEARCHED (Int. Cl.4)

The present search report has been drawn up for all claims

| Place of search | Date of completion of the search | Examiner |
|---|---|---|
| THE HAGUE | 30-07-1985 | ANGIUS P. |